# EUROPEAN PATENT SPECIFICATION

(11) **EP 2 317 203 B1**
(45) Date of publication and mention of the grant of the patent: **29.08.2012**
(21) Application number: 10014180.3
(22) Date of filing: 02.11.2010
(51) Int. Cl.: F16L 58/18, F16L 59/20, F16L 13/02

(54) **Method for coating a joint between two pipes**
Verfahren zur Beschichtung einer Verbindung von zwei Rohren
Procédé de revêtement d'un raccord de deux tuyaux

(30) Priority: 02.11.2009 NL 1037432
(43) Date of publication of application: 04.05.2011
(73) Proprietor: C.C. Rombouts Kunststof Techniek Holding B.V., 4691 RZ Tholen (NL)
(72) Inventor: Rombouts, Cornelis Christianus, 4614 GK Bergen op Zoom (NL)
(74) Representative: Griebling, Onno

(56) References cited:
- BE-A1- 898 119
- NL-C2- 1 033 399
- US-A- 4 629 216
- US-A1- 2007 063 509

## Description

The present invention relates in general to connecting plastic parts, more particularly parts made from a thermoplastic plastic.

There are plastics that can be glued, or that can be softened by applying a solvent and which can be glued in this way. There are however thermoplastic plastics that can not be treated in this way, or only very difficultly, and two important examples in this category are polypropylene (PP) and polyethylene (PE). The present invention therefore in general relates to connecting PP parts and PE parts to each other, but it is noted that application of the method proposed by the present invention is not limited to PP or PE but that this method can also be applied to other thermoplastic plastics.

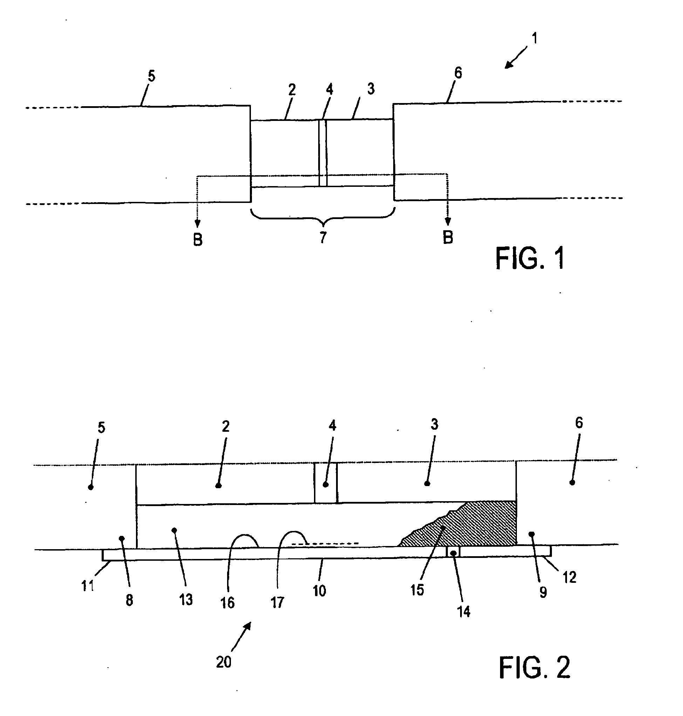

The present invention most particularly relates to a method for making a joint between steel pipes that are provided with a plastic coating for protection, for instance a PP coating or a PE coating. Such pipes exist in different diameters, and are for instance used for transportation of natural gas, and for protection of these pipes it is essential that they are surrounded by a plastic mantle completely and seamlessly. The pipes are manufactured in a plant, with a certain standard length which may for instance be 6 m, but which may also be 20 m, wherein a plastic mantle of for instance PP is applied, with a suitable primer between the pipe and the mantle. Here, both ends of the pipes are left free of this plastic mantle, or this mantle is removed, over a length of about 20 cm, in order to make it possible that the steel pipes are welded to each other in order to thus form a transportation pipe line. This welding is done in situ. Figure 1 is a side view schematically showing a part of the thus formed pipe line 1 at the location of such weld. The figure shows the exposed end segments 2 and 3 of the metal pipes with the joint 4, as well as the plastic mantle 5 and 6. From the figure it clearly shows that, after welding, the pipe line 2 is protected by the plastic mantle over its entire length, except always the coupling sections 7 consisting of the end segments 2 and 3 with the joint 4. In order to obtain an actually good protection of the pipe line 1, it is essential that also the coupling sections 7 are provided with a good and seamlessly adhering coating.

Dutch patent 1033399 describes a method for obtaining such protective coating. First, a sheet-shaped mechanically stable material 10 is bent around a coupling section 7 and around the end parts 8, 9 of the mantles 5, 6 adjacent to this coupling section 7, as clearly shown in figure 2 in a larger scale. The material 10 extends in circumferential direction over an angle larger than 360°, so that the end parts of the material 10 overlap each other. The bent material 10 thus forms a closed, cylindrical cylinder indicated by reference numeral 20. The axial end parts 11, 12 of this cylinder 20 are hermetically connected to the said end parts 8, 9 of the mantle 5, 6, and the said end parts of the material 10 which overlap each other (not shown in figure 2) are also attached to each other. Thus, a ring-shaped space 13 is defined between the cylinder 20, metal end segments 2, 3 and the end parts 8, 9 of the mantles 5, 6. An opening 14 is made in the cylinder 20, through which a hardening material 15 in liquid condition is introduced into said space 13. One assures that the air present in this space can escape, so that the space 13 is filled completely. After hardening, the material 15 forms the coating desired.

An important aspect of this known method is the choice of material. In the case of comparable, known per se methods, in stead of the said cylinder 20, a cylindrical mould is used that does not adhere to the mantles 5, 6 and does not adhere to the filling material 15, and which is removed after hardening of the filling material 15. Among other things, it then is a disadvantage that the filling material 15 is exposed, wherein particularly the seam between the filling material 15 and the mantles 5, 6 is vulnerable. In contrast, said patent describes that the cylinder 20 adheres to the mantles 5, 6, and that the filling material 15 adheres to the cylinder 20 and to the steel 2, 3, 4, with a suitable primer in between. A particular problem solved by the said patent concerns the fact that the material of the mantles 5, 6 typically is a PP or comparable material, and that it is not possible to attach different materials to for instance PP or PE. It is possible to make the cylinder 30 from for instance PP or PE or alternatively form an equal plastic material and to make this melt together with the material of the mantles 5, 6, but then the filling material 15 can not adhere to the cylinder 20. Said patent solves this problem by manufacturing this cylinder from a PP or PE sheet 10 which on its inner surface 16, i.e. the surface directed towards the space 13, is provided with a glass fibre layer molten into the PP/PE material, schematically indicated at 17 in figure 2. Now a hardening material can be used as filling material 15, which adheres both to the primer on the steel 2, 3, 4 and to the glass fibre 17 on the inner surface 16 of the cylinder 20.

Belgian patent BE 898199 describes another known method.

It is an important objective of the present invention to further improve on these known methods.

In the method as described in Dutch patent 1033399, the sheet 10 is wound on the outer surface of the mantle 5, 6; this causes the space 13 to have an outer radius equal to the outer radius of the mantle 5, 6. The sheet has a substantial thickness in the order of some millimetres, and this causes the cylinder 20 to have an outer radius substantially larger than the mantle 5, 6. This is a disadvantage if the pipe line 1 must be arranged in the soil using axial pushing force (pressing method): stones or the like, present in the soil, may damage the cylinder 20 or may even pull the cylinder 20 off of the mantle 5, 6.

In the case of the method as described in Dutch patent 1033399, a sheet 10 is used which at one surface 16 is provided with a fibre layer molten into the surface, typically glass fibre. This fibre layer 17 hampers the connection between the material of the sheet 10 and the material of the mantle 5, 6.

With respect to the way in which the material of the sheet 10 is connected to the material of the mantle 5, 6, the Dutch patent 1033399 only mentions that this is done by thermal welding. In practice, this is done with hot air. A thermal welding process on the basis of hot air is difficult to automate, and in that case requires a complicated and expensive installation. Further, a thermal welding process on the basis of hot air has a disadvantage that it involves a relatively slowly crawling weld in circumferential direction, so that the entire welding process requires relatively much time. Further, this process has a disadvantage that it must be executed in outer air, and that weather influences such as rain and wind may largely influence the result achieved.

These and other aspects, features and advantages of the present invention will be further clarified by the following description with reference to the drawings, in which same reference numerals indicate same or similar parts, in which indications "under/above", "higher/lower", "left/right" et cetera only relate to the orientation shown in the figures, and in which:
figure 1 is a side view of a pipe line at the location of a joint;
figure 2 schematically illustrates, in a larger scale, the protection of the line part at the location of the joint according to the state of the art;
figures 3 and 4 schematically illustrate some aspects of the method proposed by the present invention;
figure 5 shows a schematic perspective view of a thermal tape proposed by the present invention;
figure 6 shows a schematic perspective view of a plate provided with a thermal tape;
figure 7 is a schematic cross section illustrating the use of the thermal tape.

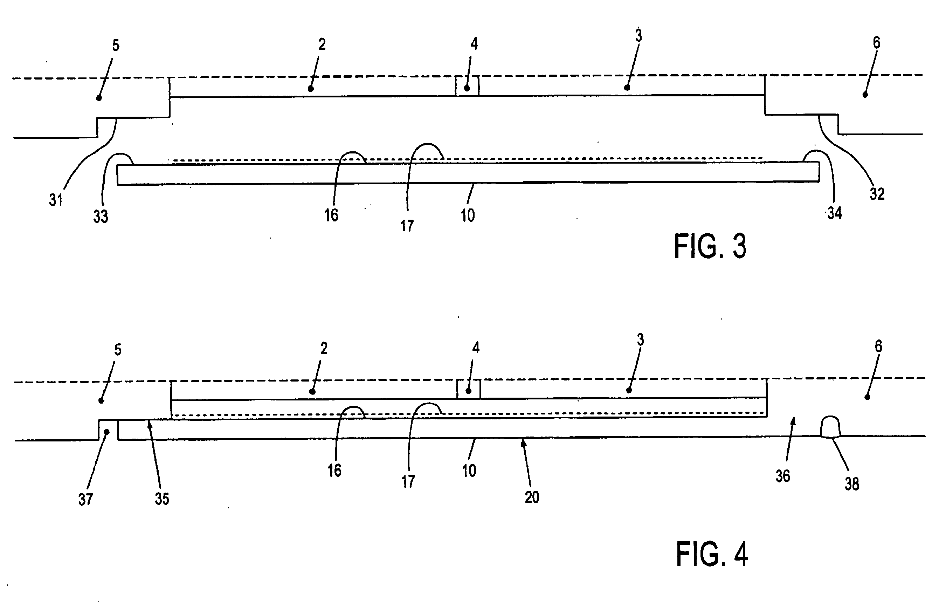

Figure 3 schematically illustrates some aspects of the method proposed by the present invention. A sheet-shaped, bendable and mechanically stable material 10 is shown in cross section, that, at a first surface 16, is provided with a fibre layer molten into the surface, as known per se. A suitable thickness of this sheet-shaped material 10 is 3 mm, but this thickness is not critical; in the following, this sheet-shaped material 10 will be indicated with the phrase "plate". The material of the plate 10 is a PP or PE and the fibre layer 17 preferably consists of glass fibre, preferably a woven mat. When the fibre layer 17 is molten into the surface, typically the entire surface 16 is covered; it has to be considered in this respect that typically a large plate is provided with the fibre layer, and that this large plate is subsequently sawn or cut to strips in order to form multiple plates 10. According to an aspect of the present invention, the fibre layer 17 is removed along opposite edges of the plate 10, in order to thus form edge areas 33, 34 which are free of fibres. Removal can for instance be done by milling, sanding or scraping.

The figure further shows a part of the coupling section 7, i.e. the combination of the end segments 2, 3 and the joint 4, with the end parts of the mantle 5, 6 adjacent thereto. The end segments 2, 3 as well as the joint 4 may if desired be pre-processed in a suitable manner, typically cleaned by sand blasting and provided with a primer. According to an aspect of the present invention, a portion of the outer side of each mantle 5, 6, adjacent the coupling section 7, is removed in order to thus provide each mantle 5, 6 with a recessed end plateau 31, 32. Removal may for instance be done by milling or sanding.

It is noted that the order of making the edge areas 33, 34 and the recessed end plateaus 31, 32 is not relevant.

Then, the plate 10 is folded around the coupling section 7, overlapping with the recessed end plateaus 31, 32 of the mantles 5, 6. The axial length of the recessed end plateaus 31, 32 is chosen such that the plate 10 amply fits into these recesses. In a formula:
L31 + L7 + L32 > L10, wherein:
L31 is the axial length of the first end plateau 31;
L7 is the axial length of the coupling section 7;
L32 is the axial length of the second end plateau 32;
L10 is the axial length of the plate 10.

The radial dept of the recessed end plateaus 31, 32 is chosen substantially equal to or only slightly differing from the thickness of the plate 10.

The radial dimension (width) of the fibre-free edge areas 33, 34 is chosen such that the axial length of the remaining fibre layer 17 is substantially equal to the axial length of the coupling section 7.

Preferably, this is all symmetrical, it is to say that the widths of the fibre-free edge areas 33, 34 are mutually equal and that the axial lengths of the end plateaus 31, 32 are mutually equal.

Figure 4 at the left hand side shows that the fibre-free edge area 33 of the plate 10 lies on the first end plateau 31, and that the outer diameter of the cylinder 20 formed by the bent plate 10 is substantially equal to the outer diameter of the mantle 5. The interface 35 between the fibre-free edge area 33 and the first end plateau 31 is free from fibres, while the outer surface of the space 13 is substantially fully covered by the fibre layer 17. Figure 4 at the right hand side shows the situation after executing the heat treatment, wherein the interface had disappeared and the fibre-free edge area 33 is molten together with the first end plateau 31, so that a solid and air-tight connection 36 has been formed between the fibre-free edge area 33 and the first end plateau 31. Because during the heat treatment also radially inwards pressure is exerted on the edge areas 33, 34 of the bent plate 10, the outer diameter of the cylinder 20 formed by the bent plate 10 may have slightly reduced: it is preferred that, in the molten-together condition, the outer diameter of the cylinder 20 is equal to the outer diameter of the mantle 5, 6.

Figure 4 at the left hand side shows that a gap 37 remains between the cylinder 20 and the original, non-recessed part of the mantle 5. Figure 4 at the right hand side shows that this gap 37 is filled with a weld 38, in order to thus obtain a pipe line 1 with a gap-free surface.

The method discussed above with reference to figures 3 and 4 starts with the situation that the mantle 5, 6 has a substantial thickness, substantially thicker than the plate 10, so that sufficient mantle material remains below the end plateaus 31, 32. The thickness of the mantle 5, 6 is however a given not controlled by the present invention; thus, situations are conceivable where the pipes are provided with a relatively thin mantle. In that case, it is not possible to apply a recess with a depth equal to the plate thickness. In such case, the present disclosure proposes a variation wherein a recess is applied with a relatively small depth, or wherein no recess at all is applied in the mantle 5, 6. In both cases, the pipeline 1 will then have a larger diameter at the location of the plate 10 as compared to the outer diameter of the mantle 5, 6. Then the present disclosure proposes to bevel the side edges of the plate 10, in the surface opposite the edge areas 33, 34, under an angle of 30° or less, in order to make the transition from the mantle diameter to the plate diameter more gradual. It is noted that, if no recess is applied at all in the mantle 5, 6, the gap 37 described above does not emerge. It is further noted that, if it is not intended to apply a recess, it is nevertheless preferred to sandpaper the surface of the mantle in order to remove possible dirt and bumps.

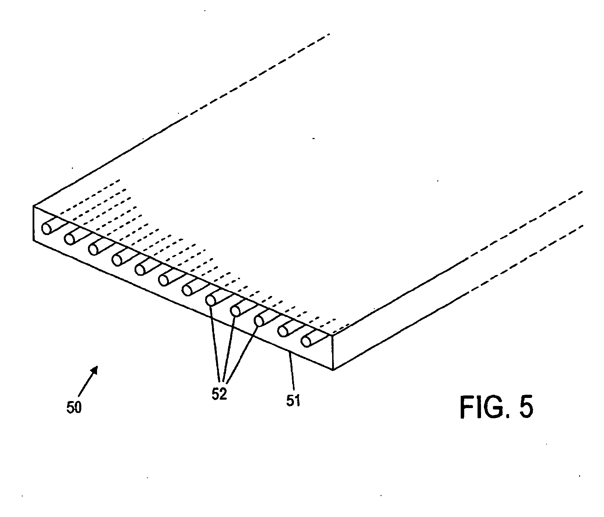

Details of the method proposed by the present invention for implementing the heat treatment, i.e. the thermal welding, will now be discussed with reference to figures 5-7. The invention proposes to use a thermal tape 15. Figure 5 shows a schematic perspective view of an embodiment of such tape. The tape 50 comprises a supple plastic carrier foil 51 provided with one or more resistance wires 52, arranged such that, on current passing through the one or multiple resistance wires 52, a substantial part of (and preferably the entire) surface of the tape is heated to above the melting point. The figure illustrates an embodiment with a plurality of resistance wires 52 that are mutually parallel and that are directed according to the longitudinal direction of the tape 50. In another embodiment (not shown) the resistance wires 52 may have a wave shape. In a special embodiment (not shown) there is one single resistance wire, that extends over substantially the entire width of the tape 50 in accordance with a zigzag pattern. An advantage of an embodiment with multiple wires is that in the case of a broken wire, wires still remain for executing the melting process; in the case of an embodiment with one single wire, the tape is completely unusable. An advantage of an embodiment with a single wire is that it is easier to assure that all parts of the tape are heated to the same extent, because at all places the same current flows.

The tape 50 may be manufactured to a large length, for instance 100 meter; an important advantage is that the tape may be wound to a roll, and that at the location for thermal welding a tape section is cut with a length suitable for the application concerned. The same tape can thus be used with pipelines with mutually different diameters.

The resistance wires may be made from any suitable material, for instance copper wire or steal wire. Important requirements set to the wire material are that it is electrically conductive, has a certain degree of resistance in order to dissipate energy and convert to ohmic heat, and is heat conductive to a sufficient extent. Each wire 52 may have a circular cross section, but the wires may also be flattened. In the case of flattened wires 52, it may be advantageous if the body plane of the wires 52 is parallel to the body plane of the carrier foil 51.

The carrier foil 51 is made of a material that can be molten together with the mantle 5, 6 and the plate 10. If the mantle 5, 6 is made of a PP, the plate 10 and the carrier foil 51 are preferably also made of a PP.

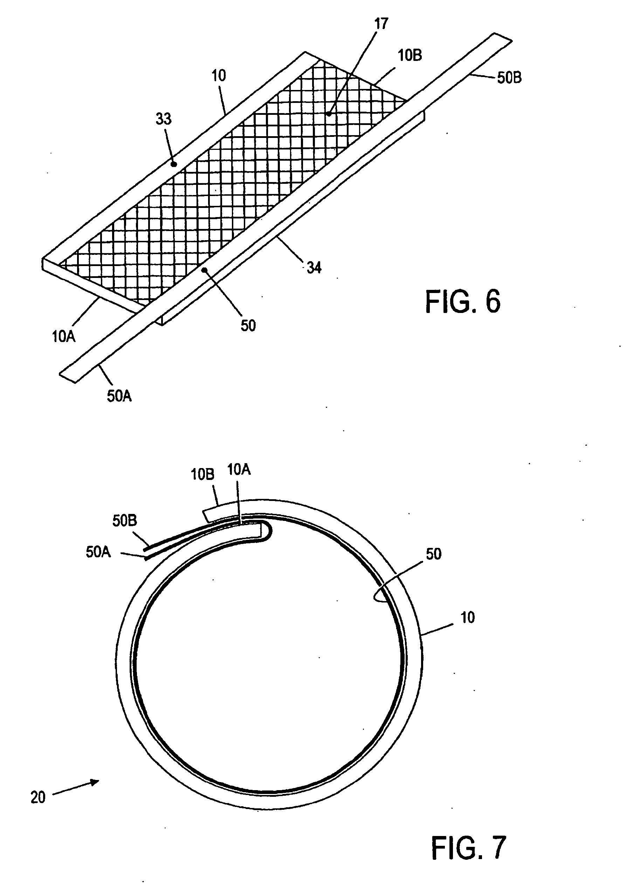

According to the present invention, the thermal tape 50 is arranged in the interface 35 between the fibre-free edge areas 33, 34 and the corresponding end plateaus 31, 32. In this context it is possible that first thermal tapes 50 are wound around the end plateaus 31, 32 and that afterwards the plate 10 is bent around this. Preferably however, the thermal tapes 50 are first arranged on the fibre-free edge areas 33, 34 of the plate 10. Figure 6 is a schematic perspective view showing a plate 10 of which the first edge area 33 is still free, and wherein a thermal tape 50 is applied on the second edge area 34. For easy handling of the plate 10 with the two thermal tapes 50, each thermal tape 50 may be fixed by a heat treatment. This may be done in advance. It can be seen in figure 6 that the length of the thermal tape 50 is larger than the length of the plate 10.

Figure 7 is a schematic cross section, perpendicular to the axis of the pipeline 1, through the plate 10 after it has been bent around the mantles 5, 6. The mantles 5, 6 and the pipes 2, 3 are not shown in this figure for sake of clarity. It can clearly be seen that the plate 10 has two ends 10A and 10B overlapping each other, wherein in this case the second end 10B lies outside the first end 10A. At the first plate end 10A, a first end 50A of the tape 50 projects, which is folded back along the outer surface of the plate. At the second plate end 10B, a second end 50B of the tape 50 projects, that continues straight ahead (tangentially) at the outer side of the first tape end 50A. Alternatively, cuts might be arranged in the side edge of the plate 10 in order to allow the tape ends to project radially outwards.

In the case of a tape with multiple longitudinal wires 52, mutually parallel, the second plate end 10B is preferably positioned onto the first plate end 10A such that the wires 52 at the first tape end 50A and the wires 52 at the second tape end 50B are displaced with respect to each other.

Squeeze belts or the like are arranged around the side edges of the bent plate 10; this is not shown for sake of simplicity.

Connectors are attached to the two free tape ends 50A and 50B, which on the one hand make contact with all resistance wires and on the other hand are suitable for connection to a connection wire. These connection wires are connected to a voltage source or current source, in order to thus allow a suitable current to flow through the connection wires. Heat is generated by the resistance of these wires, causing the materials of the mantle 5, 6, of the plate 10, and of the carrier foil 51 to soften and to melt together. After sufficient time, depending on the temperature and pressure reached, the current is switched off. After hardening of the material, a strong and hermetic joint has been obtained, in which the resistance wires remain.

It is desirable that the materials of the mantle 5, 6 and of the plate 10 melt together directly. This is achieved in a relatively simple manner, the carrier foil 51 being perforated between the wires 52: then, the mantle 5, 6 and the plate 10 contact each other directly through these perforations.

The plate ends 10A, 10B overlapping each other are also welded together, for instance also with a tape 50, and eventually this space 13 is filled with a suitable material, for instance a hardening material, in the manner as described above.

It will be clear to a person skilled in the art that the invention is not limited to the exemplary embodiments discussed in the above, but that several variations and modifications are possible within the protective scope of the invention as defined in the attached claims. Although the invention has specifically been described for the application of arranging a bent plate around a welding place of a welded pipe, the invention can also be used for arranging a protection around a tube part of which a part of the mantle is removed for any reason.

Features which have only been described for a certain embodiment can also be used with other described embodiments. Features of different embodiments can be combined in order to achieve another embodiment. Features which have not explicitly been described as being essential may also be omitted.

The reference numerals used in the claims only serve as clarification for understanding the claims in the context of the embodiments described, and should in no way be interpreted in a limiting manner.

## Claims

1. Method for arranging a protective coat around a section (7) of a pipeline (1) which consists of a metal pipe (2, 3) provided with a plastic protective mantle (5, 6), which protective mantle (5, 6) at the location of said section (7) is interrupted or removed, the plastic protective mantle (5, 6) being made from a PP or a PE;
wherein recessed plateaus (31, 32) are arranged in edge parts of the protective mantle (5, 6), adjacent the said section (7), by removing a part of the thickness of the protective mantle (5, 6);
wherein around said section (7) and partly overlapping with said plateaus (31, 32) of said edge parts of the protective mantle (5, 6), a plate (10) is bent of a plastic PP or PE material that can be molten together with the material of the protective mantle (5, 6), with thermal tapes (50) interposed at the location of interfaces (35) between the protective mantle (5, 6) and the plate (10), each thermal tape (50) comprising:
a plastic carrier foil (51) from a thermoplastic PP or PE plastic, and at least one resistance wire (52),
accommodated in the foil or arranged on a major surface of the foil, for melting at least a part of the tape but preferably the entire tape through Ohmic heating,
wherein the plate (10) is attached to the edge parts of the protective mantle (5, 6) by:
generating, in the resistance wire or resistance wires, a current of sufficient magnitude and sufficient duration so that through Ohmic heating at least a part of the tape (50) and at least a part of the surfaces (31, 32; 32, 34) of the plate (10) and the protective mantle (5, 6) melt together;
after which the current is stopped in order for the molten plastic parts to cool down to form a solid joint (36); **characterised in that** the foil (51) is provided with perforations between the parts of the resistance wire or resistance wires lying next to each other; and **in that**
a gap (37) remaining between the plate (10) and the protective mantle (5, 6) is filled by a welding bead (38).

2. Method according to claim 1, wherein said section (7) is a coupling section, where end parts of pipe segments are attached to each other by a weld (4) in an axially aligned manner.

3. Method according to any of the claims 1-2,
wherein thermal tapes (50) are applied to edge parts (33, 34) of the plate (10), and are preferably attached to these edge parts by partly melting, before the plate is bent around said pipeline section (7).

4. Method according to any of the claims 1-3,
wherein the plate (10), at its inner surface directed towards the metal pipe (2, 3), is provided with a fibre layer (17), preferably glass fibre, attached to this inner surface and preferably molten into this inner surface.

5. Method according to any of the claims 1-2,
wherein the plate (10) on its inner surface directed towards the metal pipe (2, 3) is provided with a fibre layer (17), preferably glass fibre, attached to this inner surface and preferably molten into this inner surface;
wherein edge areas (33, 34) of the inner surface of the plate (10), if necessary, are pre-processed by removing the fibre layer (17) at the location of this edge areas (33, 34);
and wherein thermal tapes (50) are arranged to the fibre-free edge areas (33, 34) of the plate (10), and are preferably attached to these edge areas (33, 34) by means of partly melting, before the plate is bent around said pipeline section (7).

6. Method according to any of claims 1-5, wherein the depth of said plateaus (31, 32) is substantially equal to the thickness of the plate (10).

7. Method according to any of the claims 1-6,
wherein a space (13) enclosed between the pipe (2, 3) and the plate (10) is completely filled with a hardening plastic material that adheres both to the pipe (2, 3) and to the plate (10) and to the protective mantle (5, 6).

8. Method for making a pipeline (1), comprising the steps of:
providing metal pipes (2, 3) that are provided with a plastic protective mantle (5, 6), wherein the protective mantle is absent or is removed at end parts of the pipes;
placing at least two pipes axially aligned with each other;
welding the longitudinal ends of the pipes together so that a joint (4) is formed;
arranging a protective coat around the joint (4) and the adjacent mantle-free end parts of the pipes by means of a method according to any of claims 1-7.

## Patentansprüche

1. Verfahren zum Aufbringen einer Schutzschicht um einen Abschnitt (7) einer Rohrleitung (1) herum, die aus einem Metallrohr (2, 3) besteht, das mit einem Kunststoffschutzmantel (5, 6) versehen ist, wobei der Schutzmantel (5, 6) am Ort des Abschnitts (7) unterbrochen oder entfernt ist, wobei der Kunststoffschutzmantel (5, 6) aus PE oder PP hergestellt ist,
wobei durch Entfernen eines Teils der Schicht des Schutzmantels (5, 6) angrenzend an den Abschnitt (7) zurückgesetzte Plateaus (31, 32) in Randstücken des Schutzmantels (5, 6) erzeugt werden,
wobei um den Abschnitt (7) herum und teilweise überlappend mit den Plateaus (31, 32) der Randstücke des Schutzmantels (5, 6) eine Platte (10) aus einem PP- oder PE-Kunststoffmaterial gebogen wird, das mittels an dem Ort von Kontaktstellen (35) zwischen dem Schutzmantel (5, 6) und der Platte (10) eingefügter Wärmebänder (50) mit dem Material des Schutzmantels (5, 6) zusammengeschmolzen werden kann, wobei jedes Wärmeband (50) umfasst:
eine Kunststoffträgerfolie (51) aus einem thermoplastischen PP- oder PE-Kunststoff und mindestens einen Heizdraht (52), der zum Schmelzen mindestens eines Teils des Bands, jedoch vorzugsweise des gesamten Bands, durch Ohm'sches Heizen in der Folie aufgenommen oder auf einer Haupttläche der Folie angeordnet ist,
wobei die Platte (10) an den Randstücken des Schutzmantels befestigt wird durch:
Erzeugen eines Stroms ausreichender Stärke und ausreichender Dauer in dem Heizdraht oder den Heizdrähten, so dass durch Ohm'sches Heizen mindestens ein Teil des Bands (50) und mindestens ein Teil der Oberflächen (31, 32, 32, 34) der Platte (10) und des Schutzmantels (5, 6) zusammenschmelzen, wonach der Strom abgeschaltet wird, um die geschmolzenen Kunststoffteile abzukühlen und eine feste Verbindung (36) zu bilden,
**dadurch gekennzeichnet, dass**
die Folie (51) zwischen den Teilen des Heizdrahtes oder der nebeneinander liegenden Heizdrähte mit Perforationen versehen ist,
und dass ein zwischen der Platte (10) und dem Schutzmantel (5, 6) übrig bleibender Spalt (37) durch eine Schweißraupe (38) gefüllt wird.

2. Verfahren nach Anspruch 1, wobei der Abschnitt (7) ein Verbindungsabschnitt ist, wobei Endstücke von Rohrsegmenten durch eine Schweißnaht (4) in einer axial fluchtend ausgerichteten Art und Weise aneinander befestigt werden.

3. Verfahren nach einem der Ansprüche 1 bis 2, wobei Wärmebänder (50) an Randstücke (33, 34) der Platte (10) angelegt werden und vorzugsweise an diesen Randstücken durch teilweises Schmelzen befestigt werden, bevor die Platte um den Rohrleitungsabschnitt (7) gebogen wird.

4. Verfahren nach einem der Ansprüche 1 bis 3, wobei die Platte (10) an ihrer in Richtung des Metallrohrs (2, 3) gerichteten Innenfläche mit einer Faserschicht (17), vorzugsweise Glasfaser, versehen ist, die an dieser Innenfläche befestigt und vorzugsweise in diese Innfläche eingeschmolzen ist.

5. Verfahren nach einem der Ansprüche 1 bis 3, wobei die Platte (10) an ihrer in Richtung des Metallrohrs (2, 3) gerichteten Innenfläche mit einer Faserschicht (17), vorzugsweise Glasfaser, versehen ist, die an dieser Innenfläche befestigt und vorzugsweise in diese Innfläche eingeschmolzen ist,
wobei Randbereiche (33, 34) der Innenfläche der Platte (10), falls erforderlich, durch Entfernen der Faserschicht (17) am Ort dieser Randbereiche (33, 34) vorbearbeitet werden,
und wobei Wärmebänder (50) an den faserfreien Randbereichen (33, 34) der Platte (10) angeordnet werden und vorzugsweise an diesen Randbereichen (33, 34) mittels teilweisen Schmelzens befestigt werden, bevor die Platte um den Rohrleitungsabschnitt (7) gebogen wird.

6. Verfahren nach einem der Ansprüche 1 bis 5, wobei die Tiefe der Plateaus (31, 32) im Wesentlichen gleich ist mit der Dicke der Platte (10).

7. Verfahren nach einem der Ansprüche 1 bis 6, wobei ein zwischen dem Rohr (2, 3) und der Platte (10) eingeschlossener Raum (13) vollständig mit einem aushärtenden Kunststoffmaterial gefüllt wird, das an dem Rohr (2, 3) sowie der Platte (10) und dem Schutzmantel (5, 6) anhaftet.

8. Verfahren zum Herstellen einer Rohrleitung (1), umfassend die Schritte:
Bereitstellen von Metallrohren (2, 3), die mit einem Kunststoffschutzmantel (5, 6) versehen sind, wobei der Schutzmantel an Endstücken der Rohre fehlt oder entfernt ist,
miteinander axial fluchtend ausgerichtetes Anordnen mindestens zweier Rohre,
Zusammenschweißen der Längsenden der Rohre, so dass eine Verbindung (4) gebildet wird,
Aufbringen einer Schutzschicht um die Verbindung (4) und die angrenzenden mantelfreien Endstücke der Rohre herum mittels eines Verfahrens nach einem der Ansprüche 1 bis 7.

## Revendications

1. Procédé pour disposer un revêtement de protection autour d'une section (7) d'un pipeline (1) qui est constitué d'un tuyau métallique (2, 3) doté d'une enveloppe de protection (5, 6) en matière plastique, laquelle enveloppe de protection (5, 6), à l'emplacement de ladite section (7), est interrompue ou retirée, l'enveloppe de protection (5, 6) en plastique étant réalisée en PP ou en PE;
selon lequel des plateaux évidés (31, 32) sont disposés dans des parties de bord de l'enveloppe de protection (5, 6), de façon adjacente à ladite section (7), en retirant une partie de l'épaisseur de l'enveloppe de protection (5, 6);
selon lequel une plaque (10) est courbée autour de ladite section (7), en chevauchant partiellement lesdits plateaux (31, 32) desdites parties de bord de l'enveloppe de protection (5, 6), plaque qui est faite de matière plastique PP ou PE qui peut être mise en fusion avec la matière de l'enveloppe de protection (5, 6), des rubans thermiques (50) étant disposés entre ces matières à l'emplacement des interfaces (35) entre l'enveloppe de protection (5, 6) et la plaque (10), chaque ruban thermique (50) comportant :
une feuille de support (51) en plastique, réalisée à partir d'une matière thermoplastique PP ou PE, et au moins un fil résistant (52), incorporé dans la feuille ou disposé sur une surface principale de la feuille, pour faire fondre au moins une partie du ruban, mais de préférence la totalité du ruban par chauffage ohmique;
selon lequel la plaque (10) est fixée aux parties de bord de l'enveloppe de protection (5, 6) par :
production, dans le fil résistant ou les fils résistants, d'un courant d'une grandeur et d'une durée suffisants pour que, par le biais du chauffage ohmique, au moins une partie du ruban (50) et au moins une partie des surfaces (31, 32; 33, 34) de la plaque (10) et de l'enveloppe de protection (5, 6) se lient par fusion;
après quoi le courant est coupé afin que les parties en plastique fondues refroidissent pour former un raccord (36) solide;
**caractérisé en ce que** la feuille (51) est pourvue de perforations entre les parties du fil résistant ou des fils résistants situées les unes à côté des autres; et **en ce qu'**un espace (37) subsistant entre la plaque (10) et l'enveloppe de protection (5, 6) est rempli avec un cordon de soudure (38).

2. Procédé selon la revendication 1, selon lequel ladite section (7) est une section de raccord où les parties d'extrémité de segments de tuyau sont fixées l'une à l'autre par une soudure (4), d'une manière alignée dans la direction axiale.

3. Procédé selon l'une quelconque des revendications 1 à 2, selon lequel les rubans thermiques (50) sont appliqués sur les parties de bord (33, 34) de la plaque (10) et sont de préférence fixés à ces parties de bord par fusion partielle, avant que la plaque ne soit courbée autour de ladite section (7) de pipeline.

4. Procédé selon l'une quelconque des revendications 1 à 3, selon lequel la plaque (10), sur sa surface intérieure dirigée vers le tuyau métallique (2, 3), est pourvue d'une couche de fibres (17), de préférence de fibres optiques, fixée à cette surface intérieure et de préférence incorporée par fusion dans cette surface intérieure.

5. Procédé selon l'une quelconque des revendications 1 à 2,
selon lequel la plaque (10), sur sa surface intérieure dirigée vers le tuyau métallique (2, 3), est pourvue d'une couche de fibres (17), de préférence de fibres de verre, fixée à sa surface intérieure et de préférence incorporée par fusion dans cette surface intérieure;
selon lequel les zones de bord (33, 34) de la surface intérieure de la plaque (10), si nécessaire, sont prétraitées en retirant la couche de fibres (17) à l'emplacement de ces zones de bord (33, 34);
et selon lequel les rubans thermiques (50) sont disposés dans les zones de bord (33, 34) exemptes de fibres de la plaque (10) et sont de préférence fixés à ces zones de bord (33, 34) par fusion partielle, avant que la plaque ne soit courbée autour de ladite section (7) de pipeline.

6. Procédé selon l'une quelconque des revendications 1 à 5, selon lequel la profondeur desdits plateaux (31, 32) est sensiblement égale à l'épaisseur de la plaque (10).

7. Procédé selon l'une quelconque des revendications 1 à 6, selon lequel un espace (13) enfermé entre le tuyau (2, 3) et la plaque (10) est complètement rempli avec une matière plastique durcissante qui adhère à la fois au tuyau (2, 3) et à la plaque (10) et à l'enveloppe de protection (5, 6).

8. Procédé pour réaliser un pipeline (1), comprenant les étapes suivantes :
préparation de tuyaux métalliques (2, 3) qui sont dotés d'une enveloppe de protection (5, 6) en matière plastique, où l'enveloppe de protection est absente ou est retirée dans les parties d'extrémité des tuyaux;
disposition d'au moins deux tuyaux axialement alignés l'un par rapport à l'autre;
mise en place d'un revêtement de protection autour du raccord (4) et des parties d'extrémité adjacentes, exemptes d'enveloppe, des tuyaux, à l'aide d'un procédé selon l'une quelconque des revendications 1 à 7.
